# FASCICULE DE BREVET EUROPEEN

(11) **EP 1 861 758 B1**
(45) Date de publication et mention de la délivrance du brevet: **13.05.2015**
(21) Numéro de dépôt: 06726143.8
(22) Date de dépôt: 24.03.2006
(51) Int. Cl.: G05D 16/10, F16K 17/04

(54) **DISPOSITIF DE PROTECTION CONTRE UNE SURPRESSION ET SOUS-ENSEMBLE DE RACCORDEMENT EN COMPORTANT APPLICATION**
ÜBERDRUCKSCHUTZVORRICHTUNG, SOWIE VERBINDUNGSBAUGRUPPE DIE EINE SOLCHE VORRICHTUNG VERWENDET
OVERPRESSURE PROTECTION DEVICE AND CONNECTION SUBASSEMBLY COMPRISING SAME

(30) Priorité: 25.03.2005 FR 0502990
(43) Date de publication de la demande: 05.12.2007
(73) Titulaire: STAUBLI FAVERGES, 74210 FAVERGES (FR)
(72) Inventeur: TIBERGHIEN, Alain-Christophe, F-74320 Sevrier (FR); PAVAN, André, Charles, F-74210 Faverges (FR)
(74) Mandataire: Myon, Gérard Jean-Pierre
(86) Numéro de dépôt international: PCT/FR2006/000656
(87) Numéro de publication internationale: WO 2006/100396

(56) Documents cités:
- WO-A-98/08012
- FR-A- 2 334 031
- US-A- 3 228 417
- US-A- 3 424 194

## Description

La présente invention concerne un dispositif de protection d'un appareil contre une surpression d'un fluide alimentant cet appareil. Elle concerne également un sous-ensemble comprenant ce dispositif de protection et permettant de raccorder un réservoir de stockage d'hydrogène sous pression et une pile à combustible d'un équipement autonome de fourniture d'énergie.

Les piles à combustible produisent de l'énergie électrique à partir d'hydrogène et d'oxygène qui peut, par exemple, provenir de l'air atmosphérique. L'hydrogène alimentant une pile à combustible doit provenir d'une source ou d'un réservoir de stockage, à partir duquel il est acheminé par un conduit d'amenée. Si elle survient, une surpression de l'hydrogène dans ce conduit d'amenée risque de détériorer la pile à combustible, à moins qu'un dispositif de protection contre les surpressions ait été prévu en amont de cette pile.

Il est connu de US-A-3,424,194 et US-A-3,228,417 d'associer un régulateur de pression à un dispositif de protection contre une surpression en sortie de ce régulateur. Dans ces systèmes, le régulateur de pression est muni d'un premier obturateur relié à une première membrane, alors que le dispositif de protection est muni d'un deuxième obturateur relié à une deuxième membrane. En cas de surpression, chacune des membranes est sollicitée et actionne, via des éléments de liaison, le déplacement de chaque obturateur vers une position d'obturation d'un trou traversant. Dans ces systèmes, deux séries distinctes de matériels agissent respectivement sur le premier obturateur et sur le deuxième obturateur pour induire leur déplacement vers leurs positions d'obturation respectives, ce qui limite la réactivité du système contre une surpression. En outre, de tels systèmes sont volumineux et lourds, ce qui constitue un inconvénient dans le cas où l'appareil à protéger contre une surpression fait partie d'un équipement autonome et portable.

C'est à ces inconvénients qu'entend plus particulièrement remédier l'invention, en proposant un dispositif de protection d'un appareil contre une surpression d'un fluide alimentant cet appareil qui assure une protection efficace et fiable de l'appareil en cas de surpression, avec une réactivité optimale et un encombrement réduit.

A cet effet, l'invention a pour objet un dispositif de protection d'un appareil contre une surpression dans un fluide alimentant cet appareil, ce dispositif de protection délimitant un trou traversant pour le passage du fluide et comprenant un obturateur mobile entre une position ouverte et une position d'obturation d'un premier tronçon du trou, caractérisé en ce qu'il comprend une soupape d'obturation mobile entre une position ouverte et une position d'obturation d'un deuxième tronçon du trou, ainsi que des moyens de déclenchement communs aptes à déclencher à la fois la manoeuvre de l'obturateur et la manoeuvre de la soupape de leurs positions ouvertes vers leurs positions d'obturation en réponse à une surpression dans le trou.

Selon d'autres caractéristiques avantageuses de ce dispositif de protection :
- les moyens de déclenchement comprennent un verrou monté à coulissement dans un alésage de manière à être mobile entre une première position, dans laquelle ce verrou retient l'obturateur dans sa position ouverte, et une deuxième position, dans laquelle ce verrou ne s'oppose pas au déplacement de l'obturateur de sa position ouverte vers sa position d'obturation ;
- il comporte un organe élastique de rappel du verrou vers sa première position ;
- l'obturateur est un tiroir monté à coulissement, le verrou et l'obturateur coulissant respectivement selon une première direction et une deuxième direction qui sont sécantes et perpendiculaires ;
- le verrou sépare l'une de l'autre des première et deuxième zones de l'alésage, et il est déplaçable de sa première position vers sa deuxième position en fonction de la pression régnant dans la première zone qui est reliée au moins par un passage de liaison au trou ;
- le verrou ne peut être déplacé de sa deuxième position vers sa première position qu'après une purge de la première zone de l'alésage ;
- dans sa position ouverte mais pas dans sa position d'obturation, l'obturateur retient la soupape dans sa position ouverte ;
- la soupape est en amont de l'obturateur qui est monté à coulissement de manière à passer de sa position d'obturation à sa position ouverte en se déplaçant vers cette soupape puis en poussant cette soupape vers sa position ouverte ;
- il comporte un passage de purge d'au moins un tronçon intermédiaire du trou lorsque la soupape est dans sa position d'obturation mais pas lorsque cette soupape est dans sa position ouverte, ce tronçon intermédiaire se trouvant en aval de la soupape ;
- l'obturateur est en aval de la soupape et adapté pour ouvrir le passage de purge avant d'avoir atteint sa position d'obturation ;
- il comporte un passage de liaison reliant le trou et une chambre partiellement délimitée par un organe faisant partie des moyens de déclenchement, ce passage de liaison comprenant une deuxième soupape d'obturation et un organe élastique de rappel de cette deuxième soupape vers l'amont et vers une position d'obturation du passage de liaison, cet organe élastique de rappel étant taré de manière à laisser la deuxième soupape être manoeuvrée par une pression en amont de la deuxième soupape excédant d'une quantité prédéterminée la pression en aval de cette deuxième soupape ;
- la chambre précitée est étanche, le dispositif de protection comprenant des moyens de purge de cette chambre ;
- il comprend des moyens de tarage de l'intensité du rappel exercé par l'organe élastique sur la deuxième soupape ;
- il comporte un indicateur d'état permettant de détecter, depuis l'extérieur du corps du dispositif, la position de l'obturateur et de la soupape ;
- l'une de deux parties complémentaires mâle et femelle d'un raccord rapide équipe ce dispositif de protection de manière à pouvoir raccorder le trou à l'autre partie du raccord.

L'invention a également pour objet un sous-ensemble de raccordement d'un réservoir de stockage d'hydrogène sous pression et d'une pile à combustible d'un équipement autonome de fourniture d'énergie électrique dont est destiné à faire partie ce sous-ensemble, ce sous-ensemble comprenant au moins un détendeur de détente de l'hydrogène sous pression et un dispositif de protection tel que défini ci-dessus et placé en aval du détendeur de manière à être à même de protéger la pile à combustible contre une surpression de l'hydrogène arrivant à cette pile à combustible.

L'invention sera bien comprise à la lecture de la description qui va suivre, donnée uniquement à titre d'exemple et faite en se référant aux dessins annexés, parmi lesquels :

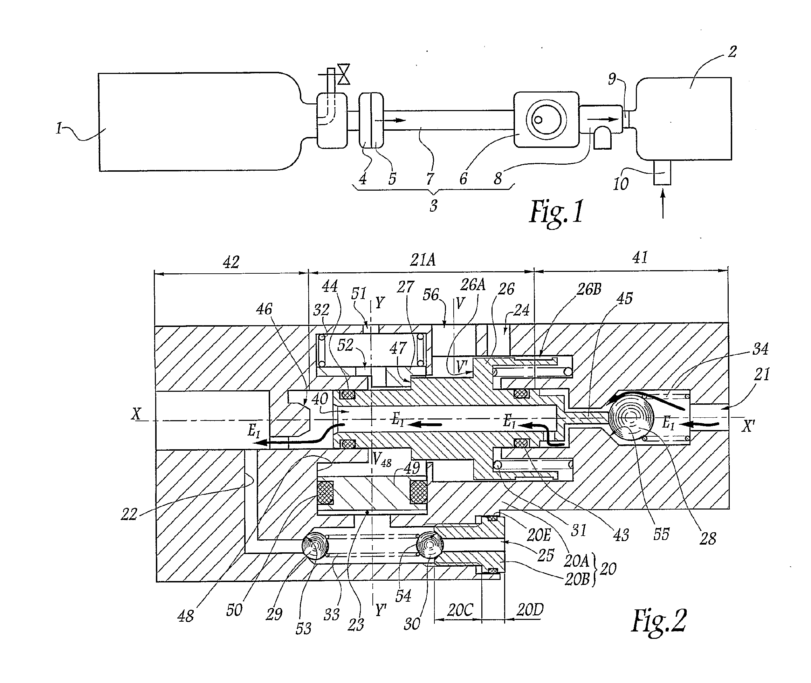

- la figure 1 est une vue schématique d'un équipement autonome et portatif de fourniture d'énergie électrique à partir d'hydrogène stocké dans un réservoir sous pression et d'oxygène atmosphérique, et à l'aide d'une pile à combustible qu'un sous-ensemble conforme à l'invention raccorde à ce réservoir ;
- la figure 2 est une coupe axiale schématique d'un dispositif de protection qui est conforme à l'invention, qui fait partie du sous-ensemble de raccordement représenté à la figure 1 et qui a pour fonction de protéger la pile à combustible d'une surpression dans le conduit d'amenée de l'hydrogène à cette pile ; et

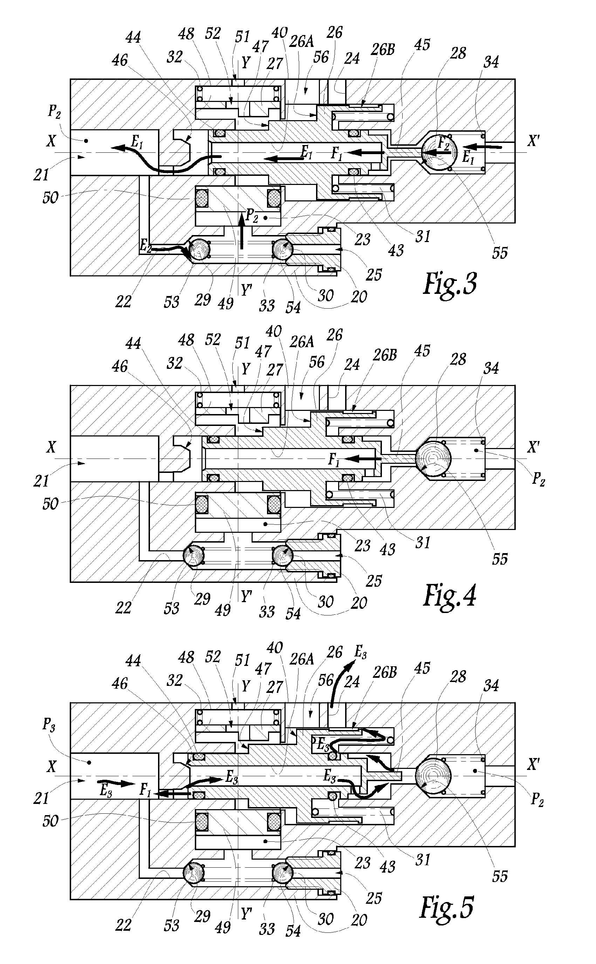

- les figures 3 à 8 sont des coupes analogues à la figure 2 mais à plus petite échelle et illustrent le fonctionnement, en cas de surpression, du dispositif de protection représenté à cette figure 2.

Sur la figure 1 est représenté un équipement autonome et portatif de fourniture d'énergie électrique à partir d'hydrogène et d'oxygène. L'hydrogène consommé provient d'un réservoir 1, dans lequel il est stocké à très haute pression, par exemple à une pression de l'ordre de 700 bars.

Outre ce réservoir 1, l'équipement représenté à la figure 1 comporte une pile à combustible 2, dont le fonctionnement est connu et qu'un sous-ensemble 3 raccorde au réservoir 1. Ce sous-ensemble 3 comporte deux détendeurs 4 et 5 en série, ainsi qu'un dispositif 6 de protection de la pile 2 en cas de surpression en aval de ces détendeurs. Une telle surpression peut être, par exemple, le fait d'un mauvais fonctionnement de l'un des détendeurs 4 et 5, qui ont pour fonction d'amener l'hydrogène à une pression de quelques bars, par exemple à une pression de l'ordre de 4 bars. Le dispositif 6 est donc installé en aval des détendeurs 4 et 5, auquel il est relié par un conduit 7 du sous-ensemble 3.

Ce dernier comporte en outre une partie femelle ou mâle 8 d'un raccord rapide connu en soi et permettant de raccorder et de dissocier rapidement le sous-ensemble 3 et la pile 2. Cette partie de raccord 8 équipe le dispositif de protection 6. L'autre partie 9 du raccord rapide équipe la pile 2, qui est en outre pourvue d'une prise 10 d'air atmosphérique. Cette prise 10 sert à prélever de l'air atmosphérique, dont la pile 2 peut ensuite utiliser l'oxygène afin de produire de l'électricité.

Le dispositif de protection 6 est représenté seul aux figures 2 à 8. Il comporte un corps 20, qui délimite un trou traversant 21, un passage de liaison 22, une chambre de volume variable 23, un tronçon 24 d'un premier passage de purge, ainsi qu'un deuxième passage de purge 25. De plus, le corps 20 renferme un obturateur 26, un verrou 27 de retenue de cet obturateur en position ouverte, une soupape 28 d'obturation du trou 21, une soupape 29 d'obturation du passage de liaison 22, une soupape 30 d'obturation du passage de purge 25, ainsi que quatre organes élastiques de rappel constitués par des ressorts 31 à 34.

Les figures 2 à 8 sont schématiques notamment en ce qu'une partie 20A du corps 20 y est représentée comme étant d'un seul tenant, dans un souci de clarté, alors que, en réalité, elle résulte de l'assemblage de plusieurs pièces, dont certaines ne sont réunis qu'après la mise en place des organes renfermés par le corps 20. Une autre partie 20B du corps 20 présente la forme d'une vis creuse, dont la tige filetée 20C est vissée dans un trou taraudé de la partie 20A et délimite partiellement la chambre de volume variable 23. Cette partie 20B comporte une tête 20D qui prolonge la tige 20C. Un joint annulaire 20E participe à l'étanchéité de la chambre 23 en étant comprimé entre les parties 20A et 20B du corps 20, dans une gorge ménagée à la périphérie de la tête 20D.

L'embouchure et le débouché du trou 21 sont destinés à être respectivement raccordés au conduit 7 et à la partie de raccord 8. En d'autres termes, ce trou 21 est destiné à être parcouru par l'hydrogène allant des détendeurs 4 et 5 vers la pile 2. Dans ce qui suit et dans les revendications annexées, les termes « amont » et « aval », ainsi que les termes analogues, se réfèrent au sens d'écoulement de l'hydrogène depuis le réservoir 1 et notamment à travers le corps 20.

Avantageusement, l'obturateur 26 présente la forme d'un tiroir monté à coulissement dans le trou 21, de manière à être mobile selon la direction longitudinale X-X' de ce trou 21. Il est percé d'un conduit central et longitudinal 40, qui relie un tronçon amont 41 du trou 21 à un tronçon aval 42 de ce même trou 21. Entre les tronçons 41 et 42, le trou 21 comporte un tronçon intermédiaire 21A que le tronçon 24 et un trou 56 mettent en communication avec l'extérieur. Le trou 56 est plus précisément un alésage présentant la forme d'un cylindre de révolution d'axe V-V'.

L'obturateur 26 est pourvu de deux joints d'étanchéité annulaire 43 et 44. Le joint 43 où joint amont a pour fonction de réaliser une étanchéité entre la paroi du tronçon intermédiaire 21A et l'obturateur 26 lorsque ce dernier est dans sa position ouverte, c'est-à-dire telle qu'illustrée à la figure 2. Le joint 44 a également pour fonction d'assurer une étanchéité entre la paroi du tronçon intermédiaire 21A et l'obturateur 26, mais en aval du joint 43.

L'extrémité amont de l'obturateur 26 présente la forme d'un doigt 45 de manoeuvre de la soupape 28 vers l'amont, puis de retenue de cette soupape 28 dans sa position ouverte. La soupape 28 est formée par une bille. Le ressort 31, qui est alors comprimé, rappelle l'obturateur 26 vers l'aval, vers un siège tronconique 46 défini par le corps 20 et situé au niveau du tronçon 42, c'est-à-dire dans une position dans laquelle l'obturateur 26 obture le trou 21 en s'appliquant sur ce siège 46.

L'obturateur 26 comporte un épaulement 47, par lequel le verrou 27 peut le retenir dans sa position ouverte. L'obturateur 26 comporte également un épaulement 26A.

Le verrou 27 est monté à coulissement dans un alésage 48, de manière à être mobile selon un axe Y-Y' perpendiculaire à l'axe X-X', entre deux positions, dans l'une desquelles il ne s'oppose pas au déplacement de l'obturateur 26 entre sa position ouverte et sa position d'obturation. Dans son autre position représentée à la figure 2, vers laquelle il est rappelé par le ressort 32 comprimé dans l'alésage 48, le verrou 27 est à même de retenir l'obturateur 26 dans sa position ouverte en formant une butée pour l'épaulement 47.

A la manière d'un piston, une portion 49 du verrou 27 obture l'alésage 48 de manière étanche, ce pour quoi elle est pourvue d'un joint d'étanchéité annulaire 50. cette portion 49 délimite partiellement la chambre de volume variable 23, qu'elle sépare d'une portion V₄₈ du volume de l'alésage 48, à savoir une portion mise en communication avec l'extérieur par un trou 51 dans le corps 20 et par un trou 52 dans le verrou 27.

Le passage 22 débouche en aval du siège 46, dans le trou 21, qu'il relie à la chambre de volume variable 23.

Le passage de purge 25 relie la chambre de volume variable 23 et l'extérieur. Il est percé dans la partie 20B du corps 20. Le ressort 33 est comprimé entre les soupapes 29 et 30, qu'il rappelle chacune contre un siège 53 ou 54, c'est-à-dire vers une position d'obturation du passage de liaison 22 ou du passage de purge 25. La partie 20B définit le siège 54. On peut la visser plus ou moins profondément dans la partie 20A de manière à modifier la distance entre les sièges 53 et 54, c'est-à-dire à régler le taux de compression du ressort 33. En d'autres termes, grâce à sa position réglable par rapport à la partie 20A, la partie 20B permet de tarer, c'est-à-dire de régler, l'intensité du rappel exercé par le ressort 33 notamment sur la soupape 29. Cette dernière est disposée de telle manière que sa position ouverte soit décalée vers l'aval par rapport à sa position d'obturation du passage de liaison 22. La soupape 30 est disposée de telle manière que sa position ouverte soit décalée vers l'amont par rapport à sa position d'obturation du passage de purge 25. Les soupapes 29 et 30 sont formées par des billes.

La soupape 28 est placée dans le trou 21, en amont de l'obturateur 26 et dans le prolongement de ce dernier, de manière à être mobile selon l'axe X-X'. Sa position d'obturation du trou 21 est décalée vers l'aval de sa position ouverte. Cette soupape 28 est rappelée par le ressort 34 vers un siège 55, contre lequel elle s'applique lorsqu'elle obture le tronçon amont 41 du trou 21.

Sur la figure 2, le dispositif de protection 6 se laisse traverser par de l'hydrogène à une pression d'environ quatre bars. L'hydrogène s'écoule des détendeurs 4 et 5 vers la pile 2, comme représenté par les flèches E₁. Le verrou 27 retient, à l'encontre du ressort 31 et par blocage de son épaulement 47, l'obturateur 26 dans sa position ouverte, dans laquelle cet obturateur 26 n'obture pas le trou 21 mais isole l'un de l'autre, de manière étanche, le tronçon 24 et le tronçon amont 41 du trou 21, c'est-à-dire le tronçon que le conduit 40 met en communication avec le tronçon aval 42 de ce trou 21. L'obturateur 26 étant dans sa position ouverte, son doigt 45 retient, à l'encontre du ressort 34, la soupape 28 dans sa position ouverte, dans laquelle cette soupape 28 est à l'écart du siège 55 et n'obture pas le trou 21. L'hydrogène en provenance des détendeurs 4 et 5 s'écoule dans le tronçon amont 41 du trou 21 en franchissant la soupape 28, puis franchit l'obturateur 26 en s'écoulant dans le conduit 40, et enfin s'écoule dans le tronçon aval 42 du trou 21.

Toujours sur la figure 2, le ressort 33 applique la soupape 29 contre le siège 53, de sorte que le passage de liaison 22 est obturé et que la chambre de volume variable 23 est isolée des fluctuations de pression qui ont lieu dans le trou 21. De ce fait, le verrou 27 reste immobile, malgré ces fluctuations de pression et malgré le fait que seul le ressort 32 le maintient dans sa position de retenue de l'obturateur 26. L'immobilité du verrou 27 lors du fonctionnement normal de l'équipement représenté à la figure 1 empêche une usure prématurée du joint 50, ce qui est avantageux. Cela conduit notamment à une grande fiabilité de fonctionnement du dispositif de protection 6.

Lorsque, par exemple du fait d'un dysfonctionnement de l'un au moins des détendeurs 4 et 5, le tronçon aval 42 du trou 21 est en surpression, c'est-à-dire à une pression P₂ supérieure à un seuil prédéterminé au-delà duquel la pile 2 risque d'être endommagée et que l'on règle en vissant plus ou moins profondément la partie 20B dans la partie 20A, l'hydrogène présent dans le passage de liaison 22 pousse, à l'encontre du ressort 33 taré de façon appropriée, la soupape 29 vers sa position ouverte, dans laquelle cette soupape 29 est à l'écart du siège 53 et n'obture plus le passage de liaison 22. Ce passage 22 met alors en communication la portion aval du trou 21 et la chambre de volume variable 23 qui, comme le trou 21, se trouve alors à la surpression P₂. Cette surpression P₂ exerce une poussée sur la portion 49 du verrou 27, à l'encontre du ressort 32 choisi de telle manière que, si elle est supérieure au seuil prédéterminé, la pression dans la chambre 23 fasse coulisser ce verrou 27 à l'écart de sa position de retenue de l'obturateur 26.

Lorsque le verrou 27 a été coulissé à l'écart de sa position de retenue, le dispositif de protection 6 est tel qu'illustré à la figure 3, sur laquelle le ressort 31 repousse l'obturateur 26 vers sa position d'obturation, ce que symbolise la flèche F₁. Parallèlement, le ressort 34 fait coulisser la soupape 28 vers sa position d'obturation, ce que symbolise la flèche F₂. Lors du déplacement du verrou 27, la chambre 23 augmente de volume en se remplissant d'hydrogène, dont l'écoulement à partir du trou 21 est schématisé par les flèches E₂.

Sur la figure 4, l'obturateur 26 est en train de coulisser sous l'action du ressort 31. En d'autres termes, il n'obture pas encore le trou 21. Il n'en est pas de même de la soupape 28, que la pression P₂ en amont d'elle et que le ressort 34 appliquent déjà sur le siège 55. De ce fait, la portion aval du dispositif de protection 6 est isolée de la surpression P₂ dans le conduit 7. Toujours sur la figure 4, l'obturateur 26 continue d'isoler l'un de l'autre le tronçon 24 et le tronçon amont 41 du trou 21.

Sur la figure 5, le coulissement de l'obturateur 26 vers le siège 46 se poursuit. Par rapport à sa position de la figure 4, cet obturateur 26 est toutefois plus proche de sa position d'obturation. Il n'isole plus l'un de l'autre le tronçon 24 et le conduit 40, si bien que ce conduit 40 et la portion du trou 21 en aval de la soupape 28 se purgent, notamment par ce tronçon 24, ce qu'illustrent les flèches E₃. La pression P₃ en aval de la soupape 28 baisse donc. Elle est inférieure à la surpression P₂ qui, même si elle continue de croître, ne peut plus endommager la pile 2.

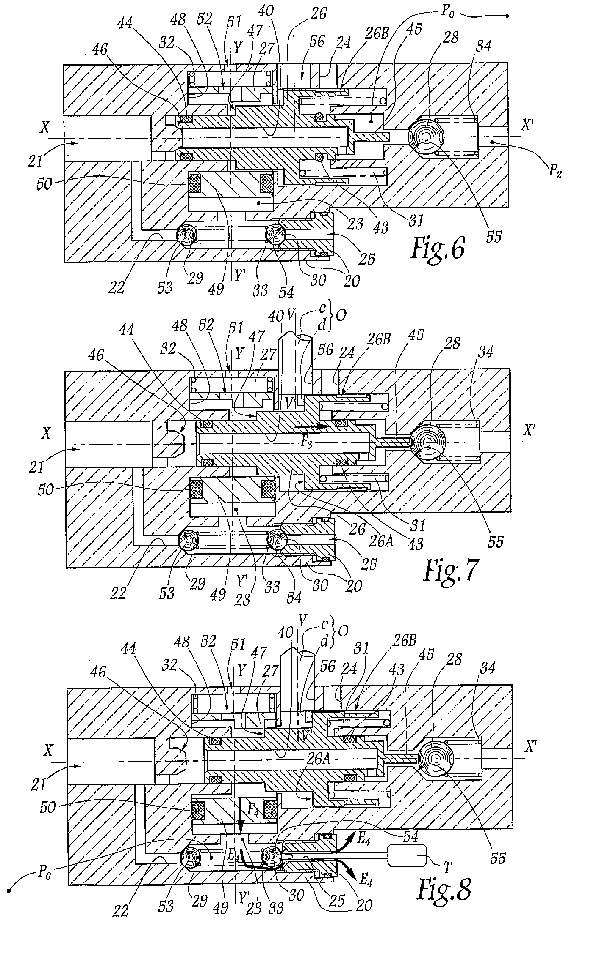

Sur la figure 6, le ressort 31 applique l'obturateur 26 contre le siège 46. De ce fait, cet obturateur 26 obture le tronçon aval 42 du trou 21, qui est également obturé par la soupape 28. En d'autres termes, il y a une double obturation entre le conduit 7 où règne la surpression P₂ et la pile 2, qui est de ce fait très bien protégée, conformément aux buts de l'invention. La protection de la pile 2 est encore améliorée par le fait que le tronçon intermédiaire 21A et le conduit 40 communiquent avec l'extérieur et se trouvent à la pression atmosphérique P₀, même si l'obturation effectuée par la soupape 28 est défectueuse. En outre, dans ce dispositif, la manoeuvre de la soupape 28 et la manoeuvre de l'obturateur 26 vers leurs sièges respectifs sont toutes deux déclenchées par le coulissement du verrou 27 à l'écart de sa position de retenue, du fait d'une augmentation de pression dans la chambre 23. Ainsi, la double obturation du trou 21 est obtenue grâce à des moyens de déclenchement communs à la soupape 28 et à l'obturateur 26. Il en résulte une réactivité accrue du dispositif de protection en cas de surpression.

Toujours sur la figure 6, la chambre de volume variable 23 est toujours en surpression, c'est-à-dire à une pression telle qu'elle empêche le ressort 32 de déplacer le verrou 27. Du fait de sa position et notamment de la position de son épaulement 47 le long de l'axe X-X', l'obturateur 26 empêche également le verrou 27 d'atteindre sa position de retenue.

Lorsque la surpression en amont de la soupape 28 disparaît, le dispositif de protection ne peut pas devenir passant de lui même, puisque les ressorts 31 et 34 continuent de maintenir l'obturateur 26 et la soupape 28 dans leurs positions d'obturation du trou 21. Cela contribue également à rendre le dispositif de protection sûr, ce qui va dans le sens du but de l'invention.

Pour faire revenir le dispositif de protection 6 dans la position de la figure 2, une intervention par une personne habilitée est nécessaire. Cette personne commence par faire coulisser l'obturateur 26 vers l'amont, jusqu'à sa position ouverte, c'est-à-dire celle de la figure 2. Pour ce faire, elle doit utiliser un outil spécial O, sans lequel une personne non habilitée ne peut pas réarmer le dispositif 6. Cet outil O, partiellement représenté aux figures 7 et 8, comprend un corps c qui porte un doigt excentré de manoeuvre d. Le corps c a une forme de cylindre de révolution et, plus précisément, une forme complémentaire de celle du trou 56. A l'opposé du doigt d, il porte une poignée non représentée.

Après avoir inséré le doigt d dans le trou 56, puis le long de l'épaulement 26A, la personne habilitée fait tourner l'outil O autour de l'axe V-V', avec lequel se confond alors l'axe du corps c. La paroi cylindrique du trou 56 guide alors le mouvement de rotation de l'outil O. Lors de ce mouvement, le doigt d appuie sur l'épaulement 26A et fait coulisser l'obturateur 26 vers sa position ouverte, ce que symbolise la flèche F₃ à la figure 7.

Lorsqu'il est suffisamment éloigné du siège 46, l'obturateur 26 actionne, par l'intermédiaire de son doigt 45, la soupape 28 vers sa position ouverte.

Une fois que l'obturateur 26 est dans sa position de la figure 2, il s'agit de purger la chambre de volume variable 23. Pour ce faire, la personne habilitée déplace la soupape 30 à l'écart du siège 54, par exemple en utilisant un tournevis T, de telle manière qu'un écoulement de purge, schématisé par les flèches E₄ à la figure 8, puisse s'instaurer depuis cette chambre de volume variable 23 vers l'extérieur. En fin de purge, la pression dans la chambre de volume variable 23 est suffisamment faible pour ne plus s'opposer au déplacement F₄ du verrou 27 vers sa position de retenue, sous l'action du ressort 32.

Lorsque le verrou 27 est retourné dans sa position de la figure 2, l'outil O et le tournevis T peuvent être ôtés et le dispositif de protection 6 est de nouveau opérationnel.

Le dispositif 6 présente un indicateur d'état en ce sens que l'obturateur 26 est pourvu d'une gorge périphérique externe 26B peinte d'une couleur différente de celle du reste de l'obturateur 26. Sous l'effet de l'action du ressort 31, la gorge 26B est amenée en regard du tronçon 24 et l'opérateur peut détecter, depuis l'extérieur du corps 20, un déplacement de l'obturateur 26 et de la soupape 28, de leur position passante de la figure 2 vers les positions des figures 5 et 6, en visualisant la gorge 26B à travers le tronçon 24. En variante, une bague colorée pourrait être montée dans la gorge 26B, ce qui éviterait de devoir la peindre.

## Revendications

1. Dispositif de protection d'un appareil (2) contre une surpression (P₂) dans un fluide alimentant cet appareil, ce dispositif de protection délimitant un trou traversant (21) pour le passage du fluide et comprenant un obturateur (26) mobile entre une position ouverte et une position d'obturation d'un premier tronçon (42) dudit trou (21), ledit dispositif comprenant une soupape d'obturation (28) mobile entre une position ouverte et une position d'obturation d'un deuxième tronçon (41) dudit trou (21), **caractérisé en ce qu'**il comprend des moyens de déclenchement communs (22, 23, 27) aptes à déclencher à la fois la manoeuvre de l'obturateur (26) et la manoeuvre de la soupape (28) de leurs positions ouvertes vers leurs positions d'obturation en réponse à une surpression (P₂) dans ledit trou (21).

2. Dispositif de protection selon la revendication 1, **caractérisé en ce que** lesdits moyens de déclenchement comprennent un verrou (27) monté à coulissement dans un alésage (48) de manière à être mobile entre une première position, dans laquelle ce verrou retient l'obturateur (26) dans sa position ouverte, et une deuxième position, dans laquelle ce verrou ne s'oppose pas au déplacement de l'obturateur (26) de sa position ouverte vers sa position d'obturation.

3. Dispositif de protection selon la revendication 2, **caractérisé en ce qu'**il comporte un organe élastique (32) de rappel du verrou (27) vers sa première position.

4. Dispositif de protection selon l'une des revendications 2 ou 3, **caractérisé en ce que** l'obturateur est un tiroir (26) monté à coulissement, le verrou (27) et l'obturateur (26) coulissant respectivement selon une première direction (Y-Y') et une deuxième direction (X-X') qui sont sécantes.

5. Dispositif de protection selon l'une des revendications 2 à 4, **caractérisé en ce que** le verrou (27) sépare l'une de l'autre des première et deuxième zones (V₄₈, 23) de l'alésage (48), et est déplaçable de sa première position vers sa deuxième position en fonction de la pression régnant dans la première zone (23) qui est reliée au moins par un passage de liaison (22) audit trou (21).

6. Dispositif de protection selon la revendication 5, **caractérisé en ce que** le verrou (27) ne peut être déplacé de sa deuxième position vers sa première position qu'après une purge (E₄) de la première zone (23) de l'alésage (48).

7. Dispositif de protection selon l'une des revendications précédentes, **caractérisé en ce que**, dans sa position ouverte mais pas dans sa position d'obturation, l'obturateur (26) retient la soupape (28) dans sa position ouverte.

8. Dispositif de protection selon la revendication 7, **caractérisé en ce que** la soupape (28) est en amont de l'obturateur (26) qui est monté à coulissement de manière à passer de sa position d'obturation à sa position ouverte en se déplaçant vers cette soupape (28) puis en poussant cette soupape (28) vers sa position ouverte.

9. Dispositif de protection selon l'une quelconque des revendications précédentes, **caractérisé en ce qu'**il comporte un passage (24) de purge d'au moins un tronçon intermédiaire (21A) du trou (21) lorsque la soupape (28) est dans sa position d'obturation mais pas lorsque cette soupape (28) est dans sa position ouverte, ce tronçon intermédiaire (21A) se trouvant en aval de la soupape (28).

10. Dispositif de protection selon la revendication 9, **caractérisé en ce que** l'obturateur (26) est en aval de la soupape (28) et adapté pour ouvrir le passage de purge (24) avant d'avoir atteint sa position d'obturation.

11. Dispositif de protection selon l'une quelconque des revendications précédentes, **caractérisé en ce qu'**il comporte un passage de liaison (22) reliant ledit trou (21) et une chambre (23) partiellement délimitée par un organe (27) faisant partie desdits moyens de déclenchement, ce passage de liaison (22) comprenant une deuxième soupape d'obturation (29) et un organe élastique (33) de rappel de cette deuxième soupape vers l'amont et vers une position d'obturation du passage de liaison (22), cet organe élastique de rappel (33) étant taré de manière à laisser la deuxième soupape (29) être manoeuvrée par une pression (P₂) en amont de la deuxième soupape (29) excédant d'une quantité prédéterminée la pression en aval de cette deuxième soupape (29).

12. Dispositif de protection selon la revendication 11, **caractérisé en ce que** ladite chambre (23) est étanche, le dispositif de protection comprenant des moyens (25, 30, 33) de purge de cette chambre (23).

13. Dispositif de protection selon l'une quelconque des revendications 11 et 12, **caractérisé en ce qu'**il comprend des moyens (20B) de tarage de l'intensité du rappel exercé par l'organe élastique (33) sur la deuxième soupape (29).

14. Dispositif selon l'une des revendications précédentes, **caractérisé en ce qu'**il comporte un indicateur d'état (26B) permettant de détecter, depuis l'extérieur du corps (20) du dispositif, la position de l'obturateur (26) et de la soupape (28).

15. Dispositif de protection selon l'une quelconque des revendications précédentes, **caractérisé en ce que** l'une (8) de deux parties complémentaires mâle et femelle (8, 9) d'un raccord rapide équipe ce dispositif de protection de manière à pouvoir raccorder ledit trou (21) à l'autre partie (9) du raccord.

16. Sous-ensemble de raccordement d'un réservoir (1) de stockage d'hydrogène sous pression et d'une pile à combustible (2) d'un équipement autonome de fourniture d'énergie électrique dont est destiné à faire partie ce sous-ensemble, ce sous-ensemble comprenant au moins un détendeur (4, 5) de détente de l'hydrogène sous pression et un dispositif de protection (6) réalisé selon l'une quelconque des revendications précédentes et placé en aval du détendeur (4, 5) de manière à être à même de protéger la pile à combustible (2) contre une surpression (P₂) de l'hydrogène arrivant à cette pile à combustible (2).

## Patentansprüche

1. Schutzvorrichtung für ein Gerät (2) gegen einen Überdruck (P₂) in einem Fluid, das dieses Gerät versorgt, wobei diese Schutzvorrichtung eine Durchgangsöffnung (21) für den Durchfluss des Fluids begrenzt und ein Verschlusselement (26) umfasst, das zwischen einer Offenstellung und einer Verschlussstellung eines ersten Abschnitts (42) der Öffnung (21) beweglich ist,
wobei die Vorrichtung umfasst
ein Verschlussventil, das zwischen einer Offenstellung und einer Verschlussstellung eines zweiten Abschnitts (41) der Öffnung (21) beweglich ist,
**dadurch gekennzeichnet, dass** sie umfasst
Mittel zur gemeinsamen Auslösung (22, 23, 27), die geeignet sind, gleichzeitig die Betätigung des Verschlusselement (26) und die Betätigung des Ventils (28) aus ihren Offenstellungen in ihre Verschlussstellungen abhängig von einem Überdruck (P₂) in der Öffnung (21) auszulösen.

2. Schutzvorrichtung nach Anspruch 1, **dadurch gekennzeichnet, dass** die Mittel zur Auslösung einen Riegel (27) umfassen, der gleitend in einer Bohrung (48) derart angeordnet ist, dass er zwischen einer ersten Stellung, in der dieser Riegel das Verschlusselement (26) in seiner Offenstellung hält, und einer zweiten Stellung, in der dieser Riegel sich nicht gegen eine Verschiebung des Verschlusselements (26) von seiner Offenstellung in seine Verschlussstellung entgegensetzt, beweglich ist.

3. Schutzvorrichtung nach Anspruch 2, **dadurch gekennzeichnet, dass** sie ein elastisches Rückstellelement (32) für den Riegel (27) in seine erste Stellung aufweist.

4. Schutzvorrichtung nach einem der Ansprüche 2 oder 3, **dadurch gekennzeichnet, dass** das Verschlusselement ein gleitend angeordneter Schieber (26) ist, wobei der Riegel (27) und das Verschlusselement (26) jeweils gemäß einer ersten Richtung (Y-Y') und einer zweiten Richtung (X-X'), die sich schneiden, gleiten.

5. Schutzvorrichtung nach einem der Ansprüche 2 bis 4, **dadurch gekennzeichnet, dass** der Riegel (27) eine erste Zone und eine zweite Zone (V₄₈, 23) der Bohrung (48) voneinander trennt und von seiner ersten Stellung in seine zweite Stellung abhängig von dem Druck, der in der ersten Zone (23) herrscht, die durch mindestens einen Verbindungskanal (22) mit der Öffnung (21) verbunden ist, verschiebbar ist.

6. Schutzvorrichtung nach Anspruch 5, **dadurch gekennzeichnet, dass** der Riegel (27) von seiner zweiten Stellung in seine erste Stellung nur nach einem Entlüften (E₄) der ersten Zone (23) der Bohrung (48) verschoben werden kann.

7. Schutzvorrichtung nach einem der vorhergehenden Ansprüche, **dadurch gekennzeichnet, dass** das Verschlusselement (26) in seiner Offenstellung, aber nicht in seiner Verschlussstellung das Ventil (28) in seiner Offenstellung hält.

8. Schutzvorrichtung nach Anspruch 7, **dadurch gekennzeichnet, dass** das Ventil (28) stromaufwärts zu dem Verschlusselement (26) liegt, das gleitend derart angeordnet ist, dass es von seiner Verschlussstellung in seine Offenstellung übergeht, indem es sich zu diesem Ventil (28) verschiebt und dann dieses Ventil (28) in seine Offenstellung drückt.

9. Schutzvorrichtung nach einem beliebigen der vorhergehenden Ansprüche, **dadurch gekennzeichnet, dass** sie einen Entlüftungskanal (24) mindestens eines Zwischenabschnitts (21A) der Öffnung (21) aufweist, wenn das Ventil (28) in seiner Verschlussstellung ist, aber nicht, wenn dieses Ventil (28) in seiner Offenstellung ist, wobei dieser Zwischenabschnitt (28A) sich stromabwärts zu dem Ventil (28) befindet.

10. Schutzvorrichtung nach Anspruch 9, **dadurch gekennzeichnet, dass** das Verschlusselement (26) stromabwärts zu dem Ventil (28) liegt und angepasst ist, den Entlüftungskanal (24) zu öffnen, bevor es seine Verschlussstellung erreicht hat.

11. Schutzvorrichtung nach einem beliebigen der vorhergehenden Ansprüche, **dadurch gekennzeichnet, dass** sie einen Verbindungskanal (22) aufweist, der die Öffnung (21) und eine Kammer (23), die teilweise durch ein Element (27) begrenzt ist, das Teil der Mittel zur Auslösung ist, verbindet, wobei dieser Verbindungskanal (22) ein zweites Verschlussventil (29) und ein elastisches Element (33) zur Rückstellung dieses zweiten Ventils stromaufwärts und in eine Verschlussstellung des Verbindungskanals (22) umfasst, wobei dieses elastische Element (33) zur Rückstellung so vorgespannt ist, dass es eine Betätigung des zweiten Ventils (29) durch einen Druck (P₂) stromaufwärts zum zweiten Ventil (29) zulässt, der den Druck stromabwärts zu diesem zweiten Ventil (29) um eine vorbestimmte Größe übersteigt.

12. Schutzvorrichtung nach Anspruch 11, **dadurch gekennzeichnet, dass** die Kammer (23) dicht ist, wobei die Schutzvorrichtung Mittel (25, 30, 33) zum Entlüften dieser Kammer (23) aufweist.

13. Schutzvorrichtung nach einem beliebigen der Ansprüche 11 und 12, **dadurch gekennzeichnet, dass** sie Mittel (20B) zum Abgleichen der Größe der Rückstellung, die von dem elastischen Element (33) auf das zweite Ventil (29) ausgeübt wird, umfasst.

14. Vorrichtung nach einem der vorhergehenden Ansprüche, **dadurch gekennzeichnet, dass** sie eine Zustandsanzeige (26B) aufweist, die in Bezug auf den Körper (20) der Vorrichtung von außen das Detektieren der Stellung des Verschlusselements (26) und des Ventils (28) gestattet.

15. Schutzvorrichtung nach einem beliebigen der vorhergehenden Ansprüche, **dadurch gekennzeichnet, dass** ein Teil (8) von einem Einsteckteil und einem komplementären Aufnahmeteil (8, 9) einer Schnellkupplung diese Schutzvorrichtung ausrüstet, derart, dass die Öffnung (21) mit dem anderen Teil (9) der Kupplung verbunden werden kann.

16. Teilanordnung zum Verbinden eines unter Druck stehenden Wasserstoff-Speicherbehälters (1) mit einer Brennstoffzelle (2) einer autonomen Anlage zur Lieferung von elektrischer Energie, zu der diese Teilanordnung vorgesehen ist, Bestandteil zu sein, wobei diese Teilanordnung mindestens einen Druckregler (4, 5) zur Minderung des unter Druck stehenden Wasserstoffs und eine Schutzvorrichtung (6) umfasst, die gemäß einem beliebigen der vorhergehenden Ansprüche hergestellt ist und stromabwärts zum Druckregler (4, 5) angeordnet ist, derart, dass die Brennstoffzelle (2) gegen einen Überdruck (P₂) des Wasserstoffs, der bei dieser Brennstoffzelle (2) ankommt, zu schützen.

## Claims

1. A protection device for protecting apparatus (2) against overpressure (P₂) in a fluid feeding said apparatus, the protection device defining a through hole (21) for passing the fluid and including a shutter (26) movable between an open position and a position for shutting a first segment (42) of said hole (21), said device including a shutter valve member (28) movable between an open position and a position for shutting a second segment (41) of said hole (21), the device being **characterized in that** it includes trigger means (22, 23, 27) suitable for triggering both drive of the shutter (26) and drive of the valve member (28) from their open positions towards their shut positions in response to overpressure (P₂) in said hole (21).

2. A protection device according to claim 1, **characterized in that** said trigger means comprise a latch (27) mounted slidably in a bore (48) so as to be movable between a first position in which the latch retains the shutter (26) in its open position, and a second position in which the latch does not oppose the shutter (26) moving from its open position towards its shut position.

3. A protection device according to claim 2, **characterized in that** it includes a resilient member (32) for returning the latch (27) towards its first position.

4. A protection device according to claim 2 or claim 3, **characterized in that** the shutter is a slidably-mounted slide (26), the latch (27) and the shutter (26) sliding respectively in a first direction (Y-Y') and in a second direction (X-X'), which directions intersect.

5. A protection device according to any one of claims 2 to 4, **characterized in that** the latch (27) separates first and second zones (V₄₈, 23) of the bore (48) from each other, and is movable from its first position towards its second position as a function of the pressure that exists in the first zone (23) that is connected to said hole (21) via at least one connection passage (22).

6. A protection device according to claim 5, **characterized in that** the latch (27) cannot be moved from its second position towards its first position until after the first zone (23) of the bore (48) has been purged (E₄).

7. A protection device according to any preceding claim, **characterized in that** when the shutter (26) is in its open position, but not when the shutter (26) is in its shut position, the shutter (26) retains the valve member (28) in its open position.

8. A protection device according to claim 7, **characterized in that** the valve member (28) is upstream from the shutter (26), which is slidably mounted to pass from its shut position to its open position while moving towards said valve member (28) and then while pushing said valve member (28) towards its open position.

9. A protection device according to any preceding claim, **characterized in that** it includes a bleed passage (24) for purging at least an intermediate segment (21A) of the hole (21) when the valve member (28) is in its shut position, but not when the valve member (28) is in its open position, the intermediate segment (21A) being located downstream from the valve member (28).

10. A protection device according to claim 9, **characterized in that** the shutter (26) is downstream from the valve member (28) and is adapted to open the bleed passage (24) before reaching its shut position.

11. A protection device according to any preceding claim, **characterized in that** it includes a connection passage (22) connecting said hole (21) with a chamber (23) defined in part by a member (27) forming part of said trigger means, said connection passage (22) including a second shutter valve member (29) and a resilient member (33) for returning said second valve member upstream towards a position for shutting the connection passage (22), said resilient return member (33) being calibrated in such a manner as to allow the second valve member (29) to be driven by pressure (P₂) upstream from the second valve member (29) when said pressure exceeds the pressure downstream from said second valve member (29) by a predetermined quantity.

12. A protection device according to claim 11, **characterized in that** said chamber (23) is leaktight, the protection device including means (25, 30, 33) for purging said chamber (23).

13. A protection device according to claim 11 or claim 12, **characterized in that** it includes means (20B) for calibrating the magnitude of the return force exerted by the resilient member (33) on the second valve member (29).

14. A device according to any preceding claim, **characterized in that** it includes a state indicator (26B) making it possible from outside the body (20) of the device to detect the positions of the shutter (26) and of the valve member (28).

15. A protection device according to any preceding claim, **characterized in that** said protection device is fitted with one (8) of two complementary male and female portions (8, 9) of a quick coupling so as to enable said hole (21) to be coupled to the other portion (9) of the coupling.

16. A subassembly for coupling a tank (1) for storing hydrogen under pressure to a fuel cell (2) of self-contained equipment for supplying electricity, with the subassembly forming part of said equipment, the subassembly comprising at least one expander (4, 5) for expanding hydrogen under pressure, and a protection device (6) made according to any preceding claim and placed downstream from the expander (4, 5) so as to be capable of protecting the fuel cell (2) against overpressure (P₂) of the hydrogen reaching said fuel cell (2).
